Europäisches Patentamt

European Patent Office

Office européen des brevets

(19)

(11) Veröffentlichungsnummer: **0 316 598**
**A1**

(12) **EUROPÄISCHE PATENTANMELDUNG**

(21) Anmeldenummer: 88117376.9

(22) Anmeldetag: 19.10.88

(51) Int. Cl.⁴: **C25D 21/12 , C23C 18/16 , G01B 11/06**

(30) Priorität: 02.11.87 DE 3737489

(43) Veröffentlichungstag der Anmeldung:
24.05.89 Patentblatt 89/21

(84) Benannte Vertragsstaaten:
**BE CH DE ES FR GB IT LI LU NL SE**

(71) Anmelder: **SCHERING AKTIENGESELLSCHAFT**
**Berlin und Bergkamen**
**Müllerstrasse 170/178 Postfach 65 03 11**
**D-1000 Berlin 65(DE)**

(72) Erfinder: **Meyer, Heinrich, Dr. Dr.**
**Bismarckstrasse 8b**
**D-1000 Berlin 12(DE)**
Erfinder: **Plieth, Walfried Johannes Ludwig,**
**Prof. Dr.**
**Orelzeile 11**
**D-1000 Berlin 20(DE)**
Erfinder: **Kurpjoweit, Martin**
**Willdenowstrasse 13**
**D-1000 Berlin 65(DE)**

(54) **Verfahren zur Kontrolle und/oder Steuerung von Metallisierungsprozessen und Vorrichtung hierfür.**

(57) Die Erfindung betrifft ein Verfahren zur Kontrolle und/oder Steuerung von Metallisierungsprozessen, dadurch gekennzeichnet, daß an der Metalloberfläche gestreutes oder reflektiertes Licht gemessen wird und hierbei festgestellte Abweichungen vom Sollwert durch Änderungen der Prozeßparamater ausgeglichen werden und eine Vorrichtung hierfür.

EP 0 316 598 A1

# VERFAHREN ZUR KONTROLLE UND/ODER STEUERUNG VON METALLISIERUNGSPROZESSEN UND VORRICHTUNG HIERFÜR

Die Erfindung betrifft ein Verfahren zur Kontrolle und/oder Steuerung von Metallisierungsprozessen.

Die bekannten Verfahren zur Kontrolle von Metallisierungsprozessen beschränken sich vorwiegend auf Badanalytik oder elektrochemische, zyklisch voltammetrische Messungen. Diese Methoden erlauben nur eine sehr indirekte Beurteilung der Badqualitäten sowie der Eigenschaften der Metallisierungsschicht. Bei den analytischen Verfahren kann nicht garantiert werden, daß alle prozeßrelevanten chemischen Verbindungen erfaßt werden; in der Praxis erweisen sich eingeschleppte, häufig unbekannte Verbindungen als außerordentlich problematisch für die Eigenschaften der abgeschiedenen Metallschichten. Darüberhinaus ist wegen der Vielzahl der die. Schichteigenschaften mitbestimmenden Verbindungen eine Prozeßkontrolle auf Grund von Konzentrationen einzelner Komponenten sehr problematisch.

Die Methode der zyklischen Voltammetrie, bei der vor allem die Charakteristika der Wiederauflösung einer geringfügigen Abscheidungsmenge auf einer inerten Elektrode untersucht werden, stellt einen direkteren Zugang zum Elektrodenprozeß dar.

Diese Methode liefert nur in begrenztem Umfang direkt interpretierbare und damit für die Prozeßsteuerung verwendbare Information, außerdem ist sie auch anfällig gegen geringfügige Verunreinigungen.

Aufgabe der vorliegenden Erfindung ist die Zurfügungsstellung eines Verfahrens und einer Vorrichtung, welche eine direkte Beurteilung aller charakteristischen Parameter eines Metallisierungsprozesses durch in-situ Messung und hierdurch eine umfassende momentane Steuerung und/oder Kontrolle dieses Prozesses ermöglichen, wobei die für die technischen Eigenschaften der Schicht relevanten Parameter erfaßt werden.

Diese Aufgabe wird erfindungsgemäß durch ein Verfahren gemäß dem kennzeichnenden Teil des Patentanspruchs gelöst.

Vorteilhafte Ausführungsformen dieses Verfahrens sind in den Unteransprüchen gekennzeichnet.

Gegenstand der Erfindung ist außerdem eine Vorrichtung zur Durchführung des Verfahrens gemäß Patentanspruch 36.

Das erfindungsgemäße Verfahren geht von der bisher nicht bekannten Erkenntnis aus, daß die Intensität des gestreuten und auch direkt reflektierten Lichts von den optischen Eigenschaften der abgeschiedenen Metalloberfläche abhängt und in sehr charakteristischer Weise vom Mikrogefüge der Oberflächenschicht beeinflußt wird. Das Mikrogefüge bedingt aber nahezu alle technischen Eigenschaften des abgeschiedenen Metalls, zum Beispiel Duktilität, Härte, Korrosionsresistenz, optisches Aussehen unter anderem.

Die Durchführung des erfindungsgemäßen Verfahrens erfolgt mittels einer Streulichtapparatur, die nach dem Prizip der Lichtstreuung an der zu metallisierenden Oberfläche funktioniert und mit deren Hilfe die Qualität sowohl galavnischer als auch chemischer Metallabscheidungsschichten in situ überwacht werden kann. Die Messung des Streulichts kann gewünschtenfalls mit einer kompletten elektrochemischen Versuchsanordnung gekoppelt werden. Durch diese Kombination wird die Messung des Streulichts unter exakt definierten elektrochemischen Bedingungen ermöglicht. Diese Bedingungen werden zum einen durch das Potential und Stromdichte vorgegeben, können aber gleichzeitig durch elektrochemische Messungen - auch zeitabhängiger Art - sowie durch Messungen des komplexen Wechselstrom-Widerstandes und des Strom/Zeitverhaltens nach einer Veränderung des Potentials charakterisiert werden.

Die Probennahme kann als Einzelprobennahme, aber auch kontinuierlich durch Verwendung einer Durchflußzelle erfolgen. Das gemessene Streulicht zeigt zum einen die optische Beschaffenheit der Oberfläche an und gibt darüber hinaus ein Bild der Kristallinität und des Mikrofefüges des Metallniederschlages. Dadurch ist in bisher nicht erreichter in-situ Weise zum Beispiel die Beurteilung der Eigeschaften eines Bades und der Metallisierungsschicht kontrollierbar.

Die technischen Möglichkeiten des erfindungsgemäßen Verfahrens sind nahezu unbegrenzt.

So ermöglicht dieses Verfahren die bisher nicht durchführbare Kontrolle der momentanen Metallabscheidung unter Vorgabe sämtlicher elektrochemischer Abscheidungsparameter.

Weitere vorteilhafte Anwendungsmöglichkeiten sind beispielsweise
- Das Prinzip der Überwachung galvanischer und chemischer Metallabscheidungsprozesse.
- Die Kopplung des erfindungsgemäßen Verfahrens mit klassischen elektrochemischen Methoden der Strom/ Potential-Registrierung in zeitabhängiger, quasistationärer oder zyklischer Weise.
- Die Kopplung mit der Messung des komplexen Wechselstrom-Widerstands.
- Die Kopplung mit der gleichzeitigen Registrierung des Strom/Zeit-Verlaufs.

Weiterhin sind zu erwähnen die Kontrolle der Metallabscheidung durch verschiedene Methoden der Auswertung der gemessenen Intensitätswerte, wobei die Gesamtintensität innerhalb eines schmalen Streukreises um den einfallenden Lichtstrahl ausgeblendet bleibt.

Es können die zeitlichen Veränderungen dieser Gesamtintensität gemessen und ausgewertet werden.

Es können charakteristische Punkte oder Bereiche der Zeitabhängigkeit der Gesamtinentensität, zum Beispiel Maxima, Minima, Halbwertsbreiten von Maxima und Minima, Wendepunkte, Kurvensteilheit, integrierte Intensitäts-/Zeitfunktionen aufgenommen und ausgewertet werden.

Es können auch ausgewertet werden:
- Interferenzstrukturen innerhalb eines definierten Streukreises um den einfallenden Lichtstrahl und die zeitliche Veränderung dieser Interferenzstrukturen.
- Die Intensität des reflektierten Lichts und der Verlauf der zeitlichen Änderung der reflektierten Intensität.
- Charakteristische Punkte oder Bereiche der Zeitabhängigkeit der direkt reflektierten Intensität, zum Beispiel Maxima, Minima, Halbwertsbreiten von Maxima, Minima,Wendepunkte, Kurvensteilheit, integrierte Intensitäts-/Zeitfunk tionen.
- Die Änderung der direkt reflektierten Intensität mit der Energie der einfallenden Strahlung.
- Die zeitliche Änderung des Reflexionsspektrums, insbesondere die zeitliche Änderung von Strukturen im Reflektionsspektrum, wie Maxima, Minima, Halbwertsbreiten.

Zu erwähnen ist auch die vorteilhafte Rückkopplung der gemessenen Daten zum Metallisierungsprozess. Die gemessenen Daten können auch gewünschtenfalls nach Speicherung und Auswertung in einem Mikroprozessor verwendet werden, um direkt auf den Badprozess rückzuwirken.

Geändert werden können die Stromdichte während der Abscheidung, das Elektrodenpotential, die Temperatur, die Badzusammensetzung, Konvektion in Bad unter anderem.

Das erfindungsgemäße Verfahren kann mit besonderem Vorteil auf alle gangigen und künftigen Metallisierungsprozesse angewendet werden, insbesondere
- die Prozesse der galvanischen Metallabscheidung aus flüssiger, wässriger oder nichtwässriger Phase,
- die stromlose Metallisierung, das heißt die chemische autokatalytische Reduktion von Metallionen an aktiven Oberflächen,
- Metallisierungsprozesse unter Einwirkung von Licht und
- alle Varianten dieser Prozesse.

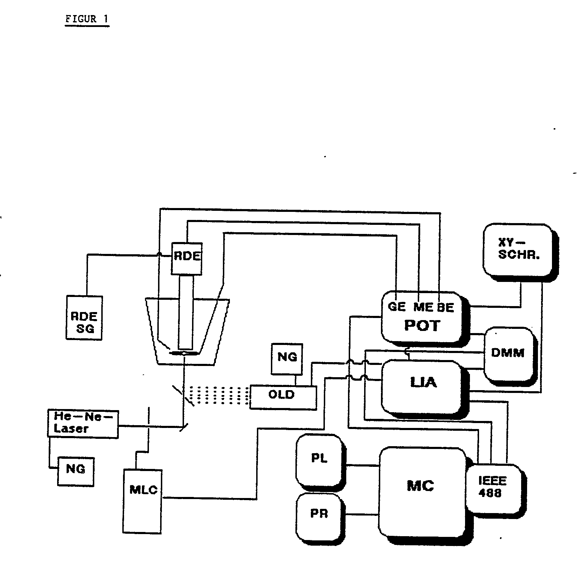

Eine erfindungsgemäße Vorrichtung zur Durchführung des gekennzeichneten Verfahrens ist in Figur 1 dargestellt.

Hierin bedeuten:
RDE rotierende Scheibenelektrode mit Steuergerät und Netzteil (RDE SG)
MLC mechanischer Lichtchopper
OLD optischer Lichtdetektor mit Netzgerät (NG)
POT Potentiostat mit Interface
GE Gegenelektrode
NE Meßelektrode
PL Plotter
LIA 2-Phasen Lock-in Verstärker
MC Mikrocomputer mit IEEE 488 Schnittstelle
BE Bezugselektrode
DMM Digital Multimeter
PR Drucker
XY- Schr.

Die vorrichtung besteht aus einer Lichtquelle, vorzugsweise ein He/Ne-Laser oder ein durchstimmbarer Farbstofflaser mit möglichst weitem Frequenzbereich. Das Licht der Lichtquelle wird senkrecht oder in einem Winkel auf die Oberfläche gelenkt, vorzugsweise in Form eines fokussierten Lichtstrahls. Der Einfallswinkel kann variiert werden. Das gestreute oder reflektierte Licht wird entweder in einem charakteristischen Winkel zur Oberfläche gemessen, wobei der Winkel breit variiert werden kann, oder es wird, wie in Figur 1 dargestellt, über eine größere Zahl von Winkeln integriert. Die Fokussierung und Sammlung der Lichtstrahlen kann durch Linsen und/oder Spiegel vorgenommen werden. Die Messung der Intensität des gestreuten oder reflektierten Lichts kann mit einem lichtempfindlichen Detektor erfolgen. Die Streulichtmessung ist gekoppelt mit einer integrierten elektrochemischen Meßanordnung mit den Komponenten Potentiostat, Funktionsgenerator zur Potentialsteuerung, Lock-in Verstärker zur Messung noch sehr schwacher Streulichtintensitäten und simultaner Messung des komplexen Wechselstrom-Widerstandes und Transientenrecorder zur Messung des Streulicht/Zeit-Verlaufs und simultan dazu Strom/ und Kapazitäts/Zeit-Verlauf. Für die Aufnahme des Elektrolyten können modifizierte elektrochemische Stardardzellen mit Meßelektrode, Bezugselektrode und Referenzelektrode verwendet werden. In derartigen Zellen können separat genommene Proben untersucht werden. Der Apparat kann aber in gleicher Weise als Durchflußzelle betrieben werden (wie in Fig. 1 dargestellt), die ein automatisches on-line Überwachen der Bäder ermöglicht.

Eine mikroprozessorgesteuerte Elektronik setzt die erfaßten Daten und Regelwerte in Steuerungen zur Veränderung der Abscheidungsparameter um.

Figur 2 zeigt die zeitliche Änderung der Intensität des gemessenen Streulichts bei Erzeugung einer Stromdichte von 25 mA/cm$^2$ in Grundelektrolyt + 35.0 mg/l Chlorid + 4 ml Netzmittellösung und Zusatz von: a) 0.0 ml; b) 0.2 ml; c)1.0 ml; d) 2.0 ml Inhibitorlösung je Liter Elektrolyt.

Figur 3 zeigt die Änderung der gemessenen Streulichtintensität bei 25 mA/cm mit der Schichtdicke für a) Produktionsbad A; b) Produktionsbad B; c) Neuansatz eines galvanischen Kupferbades.

Figur 4 zeigt Strom-Zeit-Kurven bei 150 mV vs NHE für: a) Produktionsbad A; b) Produktionsbad B.

Die folgenden Beispiele dienen zur Erläuterung erfindungsgemäß zu kontrollierender galvanischer und chemischer Metallisiereungsprozesse.

## BEISPIEL 1

Das Verfahren kann angewendet werden zur Kontrolle eines sauren Kupferbades einer typischen Zusammensetzung, bestehend aus:

50 - 100 g/l Kupfer als $CuSO_4$ x 5 $H_2O$

50 - 200 g/l Schwefelsäure konz.

0,05 g/l Natriumchlorid

15 ml/l eines üblichen Glanzbildners auf Basis von Disulfidpolyglykol.

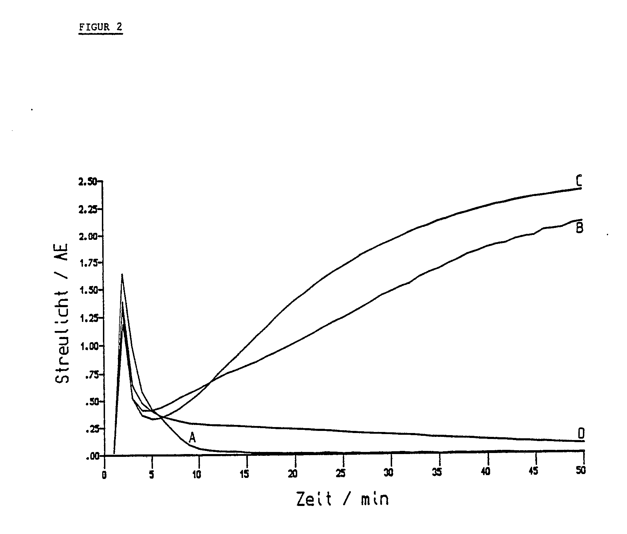

Als Inertelektrode, auf der die Abscheidung periodisch vorgenommen wird, kann zum Beispiel Platin, Gold, Glaskohlenstoff usw. verwendet werden. Dabei wird die abgeschiedene Menge nach einiger Zeit (typisch 10-100 Sekunden) wieder oxidiert. Für Langzeittests kann eine Kupferelektrode verwendet werden. Das Bad wird mit einer typischen Stromdichte von 5 A/dm² betrieben. Von der Vielzahl der gemachten Messungen ist in Fig. 2 der typische Zeitverlauf der gemessenen Streuintensität, integriert über ein Kreissegment, dargestellt.

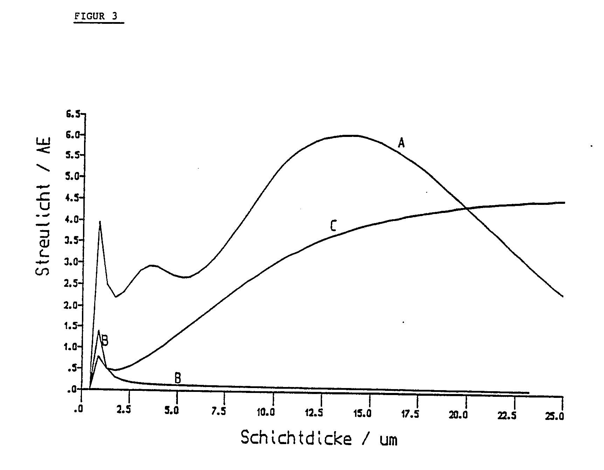

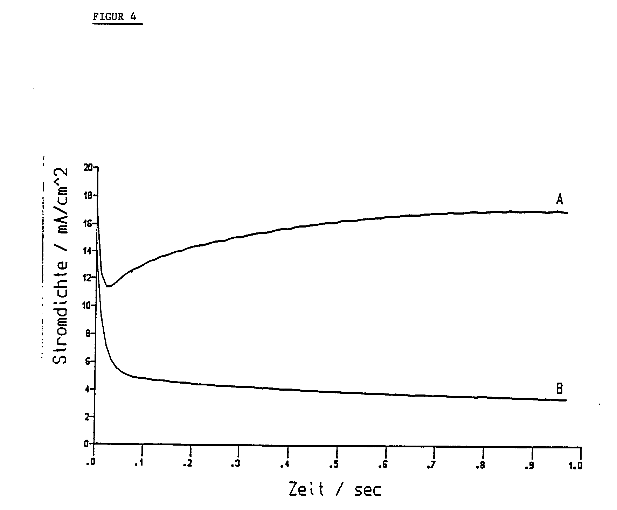

Für die Beurteilung des Bades kann in diesem Fall die Neigung der Kurve nach Durchlaufen des 1. Maximums gewertet werden; die Fälle B und C entsprechen einem guten Bad. A und D zeigen nicht brauchbare Niederschläge. Die Aussagen aus den Streulichtmessungen können durch Beurteilung anderer Messungen belegt werden. Dazu sind geeignet Schliffproben, das optische Aussehen und die Härte des Masterials, die in allen Fällen mit typischen Unterschieden des Reflexions/Zeitverlaufs korrelierten. Unterschiede können auch in den elektrochemischen Messungen registriert werden, die die Reflexionsmessungen ergänzen. Fig. 3 zeigt die Strom/Zeit-Funktion nach einem Potentialsprung in den Abscheidungsbereich und Abscheidung auf Platin, Fig. 4 die zugeordneten Streulicht/Zeit-Funktionen zweier typischer Produktionsbäder: A noch intakt, B weitgehend erschöpft. C in Fig. 4 zeigt die Streulichtkurve eines neu angesetzten Bades. Aus der Steigung der Streulicht/Zeit-Funktion nach dem 1. Maximum (positiv oder negativ) läßt sich das Bad beurteilen. Die entgegengesetzten Verläufe des Stromes unterstützen diesen Befund, sind aber weniger charakteristisch.

## BEISPIEL 2

Elektrolytische Abscheidung von Nickel aus einem typischen Nickelbad der Zusammensetzung

60 - 100 g/l Nickel als Nickelsulfat $NiSO_4$ und Nickelchlorid $NiCl_2$

30 - 40 g/l $H_3BO_3$ Borsäure

übliche Badzusätze bei 250 - 1000 A/m² und 40 - 70° C.

## BEISPIEL 3

Elektrolytische Abscheidung von Zink aus einem typischen cyanidischen Zinkbad der Zusammensetzung

20 - 60 g/l Zink als Zinksulfat $ZnSO_4$

50 -150 g/l NaCN Natriumcyanid

60 -140 g/l NaOH Natriumhydroxid

20 -120 g/l $Na_2CO_3$ Natriumcarbonat

übliche Badzusätze bei 40 - 400 A/m² Stromdichte und 20 - 50° C.

## BEISPIEL 4

Elektrolytische Abscheidung von Gold aus einem typischen cyanidischen Goldbad der Zusammensetzung

3 - 18 g/l Gold $KAu(CN)_2$

15 - 45 g/l KCN Kaliumcyanid

10 - 30 g/l KOH Kaliumhydroxid

übliche Badzusätze bei 10 - 50 A/m² Stromdichte und 50 - 70° C.

## BEISPIEL 5

Stromlose Abscheidung von Kupfer aus einem typischen Bad der Zusammensetzung

5 - 100 g/l Kupfer als $CuSO_4$ x 5 $H_2O$

25 - 100 g/l $KNaC_4H_4O_6$ x 4 $H_2O$ Kalium-Natrium-Tartrat

4 - 50 g/l KOH Kaliumhydroxid

In diesem Fall ist der Elektrodenzustand durch das Mischpotential der Redoxkomponeneten des Elektrolyten vorgegeben. Durch die Kopplung der Reflexionsmessung mit einer vollständigen Kontrolle der elektrochemischen Parameter kann dieser Zustand entweder konstant gehalten oder nach Bedarf verändert werden.

## BEISPIEL 6

Stromlose Abscheidung von Nickel aus einem Nickel-Bor-Bad der typischen Zusammensetzung

10 g/l Nickel als $NiCl_2$ x $H_2O$

15 g/l Natriumglukolat (HO-CH$_2$-COONa)
1 g/l Dimethylaminoboran (CH$_3$)$_2$NBH$_3$
0,02 g/l Bleiacetat Pb(OOC-CH$_3$)$_2$
bei pH 5 - 6 und 65° C.

BEISPIEL 7

Stromlose Abscheidung von Gold aus einem Bad der typischen Zusammensetzung
1 - 6 g/l Gold als Goldcyanid (KAu(CN)$_2$
10 -15 g/l Kaliumcyanid KCN
10 -15 g/l Kaliumhydroxid KOH
20 -25 g/l Kaliumborhydrid KBH$_4$ bei 75° C.

**Ansprüche**

1. Verfahren zur Kontrolle und/oder Steuerung von Metallisierungsprozessen, dadurch gekennzeichnet, daß an der Metalloberfläche gestreutes oder reflektiertes Licht gemessen wird und hierbei festgestellte Abweichungen vom Sollwert durch Änderungen der Prozeßparameter ausgeglichen werden.

2. Verfahren gemäß Anspruch 1, dadurch gekennzeichnet, daß die Messung in-situ durchgeführt wird.

3. Verfahren gemäß Anspruch 1, dadurch gekennzeichnet, daß die Intensitäts-und Winkelabhängigkeit des Lichts beziehungsweise der elektromagnetischen Strahlung gemessen wird.

4. Verfahren gemäß Anspruch 1, dadurch gekennzeichnet, daß es sich um monochromatisches, weitgehend kohärentes Licht im sichtbaren und ultravioletten Energiebereich handelt.

5. Verfahren gemäß Anspruch 1, worin der Sollwert die Gesamtintensität innerhalb eines schmalen Streukreises um den einfallenden Lichtstrahl, wobei der einfallende Lichtstrahl ausgeblendet wird, darstellt.

6. Verfahren gemäß Anspruch 5, worin der Sollwert die zeitlichen Veränderungen dieser Gesamtintensität darstellt.

7. Verfahren gemäß Anspruch 6, worin der Sollwert die charakteristischen Punkte oder Bereiche der Zeitabhängigkeit der Gesamtintensität, vorzugsweise Maxima, Minima, Halbwertsbreiten von Maxima und Minima, Wendepunkte, Kurvensteilheit oder integrierte Intensitäts-/Zeitfunktionen darstellt.

8. Verfahren gemäß Anspruch 1, worin der Sollwert die Interferenzstrukturen innerhalb eines definierten Streukreises um den einfallenden Lichtstrahl darstellt.

9. Verfahren gemäß Anspruch 8, worin der Sollwert die zeitliche Veränderung dieser Interferenzstrukturen darstellt.

10. Verfahren gemäß Anspruch 1, worin der Sollwert die Intensität des reflektierten Lichts darstellt.

11. Verfahren gemäß Anspruch 10, worin der Sollwert die zeitliche Änderung der reflektierten Intensität darstellt.

12. Verfahren gemäß Anspruch 11, worin der Sollwert die charkateristischen Punkte oder Bereiche der Zeitabhängigkeit der diekt reflektierten Intensität, vorzugsweise Maxima, Minima, Halbwertsbreiten von Maxima und Minima, Wendepunkte, Kurvensteilheit oder integrierte Intensitäts-/Zeitfunktionen, darstellt.

13. Verfahren gemäß Anspruch 1, worin der Sollwert die Änderung der direkt reflektierten Intensität mit der Energie der einfallenden Strahlung (Reflexionsspektrum) darstellt.

14. Verfahren gemäß Anspruch 13, worin der Sollwert die zeitliche Änderung des Reflexionsspektrums, insbesondere die zeitliche Änderung von Strukturen im Reflexionsspektrum, wie Maxima, Minima und Halbwertsbreiten, darstellt.

15. Verfahren gemäß Anspruch 1, worin der Prozeßparameter die Stromdichte oder die zeitliche Änderung der Stromdichte darstellt.

16. Verfahren gemäß Anspruch 1, worin der Prozeßparameter das Elektrodenpotential oder die zeitliche Änderung des Elektrodenpotentials darstellt.

17. Verfahren gemäß Anspruch 1, worin der Prozeßparameter die Temperatur darstellt.

18. Verfahren gemäß Anspruch 1, worin der Prozeßparameter die Zusammensetzung der verwendeten Produkte darstellt.

19. Verfahren gemäß Anspruch 1, worin der Prozeßparameter die Konvektion flüssiger Prozeßprodukte darstellt.

20. Verfahren gemäß Anspruch 1, worin der Prozeßparameter die Partialdrucke verwendeter Gase darstellt.

21. Verfahren gemäß Anspruch 1, dadurch gekennzeichnet, daß es sich um einen Prozeß der galvanischen Metallabscheidung aus flüssiger, wässriger oder nichtwässriger Phase, insbesondere Kupfer, Nickel, Gold, Zinn oder Zink handelt.

22. Verfahren gemäß Anspruch 1, dadurch gekennzeichnet, daß es sich um einen Prozeß der chemischen oder autokatalytischen Reduktion von Metallionen an aktiven Oberflächen, insbesondere des Nickels, des Kupfers, des Goldes oder des Palladiums handelt.

23. Verfahren gemäß Anspruch 1, dadurch gekennzeichnet, daß es sich um einen Prozeß der chemischen Umsetzung von metallhaltigen Gasdämpfen an einer aktiven Oberfläche handelt.

24. Verfahren gemäß Anspruch 1, dadurch gekennzeichnet, daß es sich um einen Prozeß der Aktivierung durch ionisierte Gase handelt.

25. Verfahren gemäß Anspruch 1, dadurch gekennzeichnet, daß als Lichtquelle ein He/Ne-Laser verwendet wird.

26. Verfahren gemäß Anspruch 1, dadurch gekennzeichnet, daß als Lichtquelle ein durchstimmbarer Farbstofflaser mit weitem Frequensbereich verwendet wird.

27. Verfahren gemäß Anspruch 1, daß das Licht senkrecht oder in einem Winkel auf die Metalloberfläche gelenkt wird.

28. Verfahren gemäß Anspruch 1, dadurch gekennzeichnet, daß das gestreute und reflektierte Licht in einem charakteristischen Winkel zur Oberfläche gemessen oder über eine grössere Anzahl von Winkeln integriert wird.

29. Verfahren gemäß Anspruch 1, dadurch gekennzeichnet, daß eine Fukossierung und Sammlung der Lichtstrahlen durch Linsen und/oder Spiegel erfolgt.

30. Verfahren gemäß Anspruch 1, dadurch gekennzeichnet, daß die Messung mittels eines lichtempfindlichen Detektors erfolgt.

31. Verfahren gemäß Anspruch 1, dadurch gekennzeichnet, daß die Meßdaten in einem Mikroprozessor gespeichert, ausgewertet und dann zur Veränderung der Prozeßparameter umgesetzt werden.

32. Verfahren gemäß Anspruch 1, dadurch gekennzeichnet daß es zur Überwachung galvanischer oder chemischer Metallabscheidungsprozesse dient.

33. Verfahren gemäß Anspruch 1, dadurch gekennzeichnet, daß es mit klassischen elektrochemischen Methoden der Strom/Potential-Registrierung in quasistationärer oder zyklischer Weise gekoppelt wird.

34. Verfahren gemäß Anspruch 1, dadurch gekennzeichnet, daß es mit der Messung des komplexen Wechselstromwiderstands gekoppelt wird.

35. Verfahren gemäß Ansprüchen 1 bis 34 zur Kontrolle und/oder Steuerung der momentanen Metallabscheidung unter Vorgabe sämtlicher elektrochemischer Abscheidungsparameter.

36. Vorrichtung zur Durchführung des Verfahrens gemäß Ansprüchen 1 bis 35.

37. Vorrichtung gemäß Anspruch 36, bestehend aus einer Quelle, vorzugsweise ein Laser, zur Erzeugung monochromatischer, weitgehend kohärenter Strahlung im sichtbaren und ultravioletten Energiebereich, einer optischen Einrichtung bestehend aus Blenden, Linsen und Spiegeln zur Fukossierung der elektromagnetischen Strahlung auf die Oberfläche des sich abscheidenden Metalls, einem Gefäß, in dem die Metallabscheidung durchgeführt wird, welches an der Stelle des Eintritts der elektromagnetischen Strahlung für die Strahlung transparent ausgebildet ist, einer zweiten optischen Einrichtung, bestehend aus Spiegeln, Linsen und Blenden zur Sammlung des von der Oberfläche direkt oder diffus reflektierten gestreuten oder gebeugten Lichts und in einem definierten Winkel um den einfallenden Strahl und einem Detektor zur Registrierung der Intensität der elektromagnetischen Strahlung.

FIGUR 1

FIGUR 2

FIGUR 3

Schichtdicke / um

FIGUR 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 827 963 (CALLAHAN) <br> * Ansprüche * <br> --- | 1-21,27 -37 | C 25 D 21/12 <br> C 23 C 18/16 <br> G 01 B 11/06 |
| X | GB-A-2 181 835 (THE UNIVERSITY OF LIVERPOOL) <br> * Seite 1, Zeile 7 * <br> --- | 1-20,27 -31 | |
| A | PATENT ABSTRACTS OF JAPAN, Band 8, Nr. 71 (C-217)[1508], 3. April 1984; & JP-A-58 224 192 (TOUYOU KOUHAN K.K.) 26-12-1983 <br> * Zusammenfassung * <br> --- | | |
| A | US-A-2 895 888 (VARNER) <br> ----- | | |

**RECHERCHIERTE SACHGEBIETE (Int. Cl.4)**

C 25 D
C 23 C
G 01 B
G 01 N

Der vorliegende Recherchenbericht wurde für alle Patentansprüche erstellt

| Recherchenort | Abschlußdatum der Recherche | Prüfer |
|---|---|---|
| DEN HAAG | 02-03-1989 | NGUYEN THE NGHIEP |